## Europäisches Patentamt

## European Patent Office

## Office européen des brevets

(19)

(11) Publication number: **0 513 637 A2**

(12)

# EUROPEAN PATENT APPLICATION

(21) Application number : 92107585.9

(22) Date of filing : 05.05.92

(51) Int. Cl.$^5$: **A01N 43/80**, // (A01N43/80, 59:00, 47:44, 47:36, 43:80, 33:12, 31:08)

PRIORITY 100591 IT MI91001285.

(30) Priority : **10.05.91 IT MI911285**

(43) Date of publication of application :
**19.11.92 Bulletin 92/47**

(84) Designated Contracting States :
**AT BE CH DE DK ES FR GB GR IT LI NL SE**

(71) Applicant : **GERMO S.P.A.**
**via Giotto 19/21**
**I-20032 Cormano (MI) (IT)**

(72) Inventor : **Magni, Antonio**
**Via degli Alerami, 31**
**I-20148 Milano (IT)**

(74) Representative : **Gervasi, Gemma, Dr. et al**
**NOTARBARTOLO & GERVASI Srl 33, Viale**
**Bianca Maria**
**I-20122 Milano (IT)**

(54) **Multi-purpose disinfectant compositions.**

(57)    Disinfectant compositions for persons, clothes, objects for personal use and furnishings, which show a wide range of action against fungi and bacteria, said compositions being constituted by solutions of isothiazolinic compounds associated with at least an active principle selected among quaternary ammonium salts, phenol derivatives, urea imidazolidinyl derivatives, poly(esamethylenbiguanide) and sodium hypochlorite.

EP 0 513 637 A2

The present invention relates to disinfectant compositions which show a wide range of action against fungi and bacteria and can be used for persons, cloths, objects for personal use and furnishings. In particular these compositions are suitable for destroying hyphomycetes.

The indiscriminate use of antibiotics during the last decennia has caused an abnormal proliferation of fungi and yeasts which live together with antibiotics and as a consequence are very detrimental to the health.

Soaps which are normally used for personal hygiene are not sufficient for destroying fungous flora which may develop on the human body. Analogously fungous colonies which develop in clothes cannot be destroyed by the present low temperature washing systems. Also the fungi which develop in rugs, fitted carpets, footwear, telephones and in articles which are in contact in different ways with the human body may become a carrier of infectious diseases. For this reason periodic disinfections of these articles are necessary.

Now we have found new disinfectant compositions, which are the object of the present invention. Said compositions destroy fungous colonies and at the same time perform a total sterilization at relatively low concentration which does not irritate the skin. These compositions act not only against fungi, but also against bacteria which are possibly present. The compositions of the invention are made up of solutions of isothiazolinic compounds, which are associated with at least one of the following active principles:

- quaternary ammonium salts
- phenol derivatives
- urea imidazolydinyl derivatives
- poly(hexamethylenbiguanide)
- sodium hypochlorite

The disinfectant compositions of the present invention vary in accordance with their particular use. In any case the association of the isothiazolinic compounds with one or more of the above mentioned active principles causes a synergistic effect, so that a complete sterilization will occur with a total concentration of the different disinfectants lower than that which would be necessary if the above mentioned active principles were used singly, or in a mixture, but without the isothiazolinic compounds.

The carrier of the compositions according to the invention is water, or a mixture of propane, butane or other propellants, if said compositions are used as spray. Detergent, emollient and refreshing agents, perfumes etc. may be present, depending on the use, in the carrier of the compositions according to the invention. The compositions of the invention also show a notable deodorant effect. The active principles are present in the solutions of the inventions in the following ranges:

- isothiazolinic compounds from 0.000001 to 0.15%, preferably from 0.000005 to 0.002%;
- quaternary ammonium salts from 0.1 to 10%, preferably from 0.8 to 3%;
- phenol derivatives from 0.02 to 2%, preferably 0,1 to 1%;
- imidazolydinyl urea derivatives from 0,03 to 3%, preferably from 0.3 to 3%;
- poly(hexamethylenbiguanide) from 0.5 to 10%.
- sodium hypochlorite from 1 to 15%, preferably from 3 to 6%. 5-chloro-2-methyl-4-isothiazolin-3-one and 2-methyl-4-isothiazolin-3-one are the preferred isothiazolinic compounds, which may be used also in a mixture.

Benzalkonium chloride and dimethyl-benzyl-myristil ammonium chloride are the preferred quaternary ammonium salts.

O-phenyl-phenol is the preferred phenol derivative.

2,5-dioxo-4-imidazolidinyl hydroxymethyl substituted urea and N[1,3-bis (hydroxymethyl)2,5-dioxo-imidazolidinyl]N,N′-bishydroxymethyl urea are the preferred urea imidazolidinyl derivatives.

The antibacterial activity of the compositions according to the invention was assayed by means of the method of the minimum inhibiting concentration (MIC) and minimum bactericidal concentration (MBC) as regards to the following strains:

Trichophyton rubrum, Trichophyton mentagrophytes, Microsporum canis, Epidermophyton floccosum, Candida albicans, Candida rugosa, Candida tropicalis, E. coli ATCC 25922, E. coli IM 1, E. coli IM 2, E. coli IM 3, K. pneumoniae IM 1, K. oxytoca IM 2, E cloacae IM 3, S. pyogenes IM 4, E. faecalis ATCC 11470, E. faecalis IM 4, E. faecalis IM 5, S. aureus ATCC 25923, S. aureus IM 1, S. aureus IM 2, S. epidermidis IM 1, P. aeruginosa IM 1.

The assay methods are the following:

Minimum Inihibiting Concentrations (MIC)

Hyphae tufts of Tricophyton, Microsporum and Epidermophyton are grown in nutrient broth for 3/5 days at 35 °C. Then they are repeatedly centrifuged and the residue thus obtained is suspended in a nutrient broth. The minimum inihibiting concentrations are carried out with this suspension by means of the microdilution method on microtriter plates.

As regards to the Candida strains, Sabouraud dextrose broth is used wherein mycetes are grown for 24 hours at 35 °C. Then MIC are carried out in Sabouraud dextrose broth in accordance with the microdilutions method.

Minimum Bactericidal Concentrations (MBC)

MBC of the microorganisms under examinanion are determined by using MIC dilutions which do not show visible growth. 10 µl are taken from each well and plated on Sabouraud dextrose agar and incubated at 35 °C for 24 hours for Candida strains and for 5-6 days for the other microorganisms under examination.

The aqueous dilution of the solutions of the compositions according to the invention is determined in accordance with MIC and MBC values in order to obtain the desired disinfectant effect. The following examples are reported with the purpose of illustrating but not limiting the uses of the invention.

EXAMPLE I

An aqueous solution having the following composition is prepared:
- dimethyl-benzyl-myristyl-ammonium chloride 1.2 g
- O-phenylphenol 0.2 g
- mixture of 5-chloro-2-methyl-4-isothiazolin-3-one and 2-methyl-4-isothiazolin-3-one (77:23 by weight) 0.0015 g
- deionized water to 100 g
Essential oils are present in the solution (0.5%)
This solution is particularly suitable for disinfecting linen and knitwear.

The solution is diluted in water by gradually doubling the diluent quantity, till the minimum concentration inhibiting each strain is determined. The maximum dilution and MIC/MBC values for every strains are reported:

| Strains | Dilution | MIC/MBC |
|---|---|---|
| E. coli ATCC 25922 | 1/1024 | 1 |
| E. coli IM 1 | 1/ 512 | 1 |
| E. coli IM 2 | 1/1024 | 1 |
| E. coli IM 3 | 1/2048 | 1 |
| K. pneumoniae IM 1 | 1/ 512 | 1 |
| K. oxytoca IM 2 | 1/1024 | 1 |
| E. cloacae IM 3 | 1/2048 | 1 |
| S. pyogenes IM 4 | 1/2048 | 1 |
| E. faecalis ATCC 11470 | 1/2048 | 1 |
| E. faecalis IM 4 | 1/2048 | 1 |
| E. faecalis IM 5 | 1/2048 | 1 |
| S. aureus ATCC 25923 | 1/1024 | 1 |

| | | |
|---|---|---|
| S. aureus IM 1 | 1/2048 | 1 |
| S. aureus IM 2 | 1/2048 | 1 |
| S. epidermidis IM 1 | 1/1024 | 1 |
| P. aeruginosa IM 1 | 1/1024 | 1 |
| P. aeruginosa IM 1 | 1/1024 | 1 |
| C. albicans 1 | 1/2048 | 1 |
| C. albicans 2 | 1/2048 | 1 |
| C. rugosa | 1/1024 | 1 |
| C. tropicalis : | 1/2048 | 1:2 |
| T. rubrum 1 | 1/1024 | 1 |
| T. rubrum 2 | 1/1024 | 1 |
| T. mentagrophytes | 1/1024 | 1:2 |
| M. canis 1 | 1/2048 | 1:2 |
| M. canis 2 | 1/2048 | 1 |
| E. floccosum 1 | 1/1024 | 1 |
| E. floccusum 2 | 1/1024 | 1:2 |

The above Table shows that the instant solution is active against all the strains even when it is diluted 512 times. Practically the solution was diluted 250 times for disinfecting completely linen at room temperature.

EXAMPLE II

An aqueous solution having the following composition is prepared:
- mixture of 5-chloro-2-methyl-4-isothiazolin-3-one and 2-methyl-4-isothiazolin-3-one, (77:23 by weight) 0.0015 g
- N-[1,3bis(hydroxy-methyl)-2,5-dioxo-imidazolidinyl]N,N bishydroxy-methyl-urea 0.6 g
- betaine 1.5 g
- balsams 5 g
- deionized water to 100 g

This composition is particularly suitable for baths and/or footh-baths. As in Example I, the maximum aqueous dilutions of the abovementioned solution for the different strains and MIC/MBC ratio are reported hereinbelow:

| Strains | Dilution | MIC/MBC |
|---|---|---|
| E. coli ATCC 25922 | 1/1024 | 1 |
| E. coli IM 1 | 1/ 512 | 1 |
| E. coIi IM 2 | 1/1024 | 1 |
| E. coli IM 3 : | 1/2048 | 1 |
| K. pneumoniae IM 1 | 1/ 512 | 1 |
| K. oxytoca IM 2 | 1/1024 | 1 |
| E. cloacae IM 3 | 1/2048 | 1 |
| S. pyogenes IM 4 | 1/2048 | 1 |
| E. faecalis ATCC 11470 | 1/2048 | 1 |
| E. faecalis IM 4 | 1/2048 | 1 |
| E. faecalis IM 5 | 1/2048 | 1 |
| S. aureus ATCC 25923 | 1/1024 | 1 |
| S. aureus IM 1 | 1/2048 | 1 |
| S. aureus IM 2 | 1/2048 | 1 |
| S. epidermidis IM 1 | 1/1024 | 1 |
| P. aeruginosa IM 1 | 1/1024 | 1 |
| P. aeruginosa IM 1 | 1/1024 | 1 |
| | | |
| C. aIbicans 1 | 1/ 128 | 1 |
| C. albicans 2 | 1/ 128 | 1 |
| C. rugosa : | 1/ 64 | 1 |
| C. tropicalis | 1/ 256 | 1:2 |
| T. rubrum 1 | 1/ 512 | 1 |
| T. rubrum 2 | 1/ 156 | 1 |
| T. mentagrophytes | 1/1024 | 1:2 |
| M. canis 1 | 1/1024 | 1:2 |
| M. canis 2 | 1/ 256 | 1 |
| E. floccosum 1 | 1/ 512 | 1 |
| E. floccusum 2 | 1/1024 | 1:2 |

The above Table shows that the solution, when it is diluted in water 64 times, has a secure disinfectant effect against all the strains.

Example III

An aqueous solution having the following composition is prepared:
- mixture of 5-chloro-2-methyl-4-isothiazolin-3-one and 2-methyl-4-isothiazolin-3-one (77:23 by weight ) 0.0015 g
- benzalkonium chloride 1.2 g
- O-phenyl-phenol 0.2 g
- betaine 1.5 g
- balsams 0.6 g
- deionized water to 100 g
This solution is particularly suitable for baths and/or footh-baths, when it is diluted in water 250 times.

EXAMPLE IV

An aqueous solution having the following composition is prepared:
- mixture of 5-chloro-2-methyl-5-isothiazolin-3-one and 2-methyl-4-isothiazolin-3-one (77:23 by weight ) 0.0015 g
- N[1,3bis(hydroxy-methyl)2,5dioxo-imidazolidinyl]N,N-bis-hydroxy-methyl urea 1 g
- poly(hexamethylenbiguanide) 1 g
- demineralized water to 100 g.
This solution is particularly suitable for disinfecting baby feeding-articles, for example feeding-bottles and teats, etc.

EXAMPLE V

A solution in propane-butane solvent having the following composition is prepared:
- mixture of 5-chloro-2-methyl-4-isothiazolin-3-one and 2-methyl-4-isothiazolin-3-one (77:23 by weight) 0.0015 g
- N[1,3bis(hydroxy-methyl)2,5dioxo-imidazolinil]N,N-bis-hydroxy-methyl urea 0,1 g
- poly(esamethylenbiguanidine) 0.1 g
- mixture of propane-butane to 100g
Said composition contained in an aereosol container, at the above concentration, is particularly suitable for disinfecting fitted carpets, rugs, shoes and telephones.

**Claims**

1. Disinfectant compositions consisting of solutions comprising at least an isotiazolinic compound associated with at least one of the following active principles :
    - quaternary ammonium salts
    - phenol derivatives
    - urea imidazolidinyl derivatives
    - poly(hexamethylenbiguanide)
    - sodium hypochlorite

2. Disinfectant compositions as in claim 1, wherein the active principles are present in the following concentrations:
    - isothiazolinic compounds from 0.000001 to 0.15%
    - quaternary ammonium salts from 0.1 to 10%
    - phenol derivatives from 0.02 to 2%
    - urea imidazolidinyl derivatives from 0.03 to 3%
    - poly(hexamethylenbiguanide) from 0.5 to 10%
    - sodium hypochlorite from 1 to 15%.

3. Disinfectant compositions as in claim 2 wherein the active principles are present in the following concen-

6

trations:
- isothiazolinic compounds from 0.000005 to 0.002%
- quaternary ammonium salts from 0.8 to 3%
- phenol derivatives from 0.1 to 1%
- urea imidazolidinyl derivatives from 0.3 to 3%
- sodium hypochlorite from 3 to 6%

4.  Disinfectant compositions according to claims 1 to 3, wherein the isothiazolinic compound is a mixture of 5-chloro-2-methyl-4-isothiazolin-3-one and 2-methyl-4-isothiazolin-3-one.

5.  Disinfectant compositions according to claim 4, wherein the weight ratio between 5-chloro-2-methyl-4-isothiazolin-3-one and 2-methyl-4-isothiazolin-3-one is 77:23.

6.  Disinfectant compositions according to claims from 1 to 5, wherein the quaternary ammonium salt is selected between benzalkonium chloride and dimethyl-benzyl-myristil ammonium chloride.

7.  Disinfectant compositions according to claims from 1 to 6, wherein the phenol derivative is o-phenyl-phenol.

8.  Disinfectant compositions according to the claims from 1 to 7, wherein the urea imidazolidinyl derivative is N[1,3bis(idroxymethyl)2,5-dioxo-imidazolidinyl]N,N-bishydroxy-methyl urea.

9.  Disinfectant compositions according to claims from 1 to 8, wherein the carrier which dissolves the active principles is deionized water.

10. Disinfectant compositions according to the claims from 1 to 8 wherein the carrier which dissolves is the active principles a is a propellant propane -butane mixture.

11. Disinfectant compositions according to the claims 9 and 10, which contain perfumes and/or detergent agents and/or emollient agent and/or refreshing agents.